# EUROPÄISCHE PATENTSCHRIFT

(11) **EP 0 708 941 B1**
(45) Veröffentlichungstag und Bekanntmachung des Hinweises auf die Patenterteilung: **10.03.1999**
(21) Anmeldenummer: 94920386.3
(22) Anmeldetag: 07.07.1994
(51) Int. Cl.: G06F 11/00

(54) **VERFAHREN ZUM TEST EINES OBJEKTORIENTIERTEN PROGRAMMS**
PROCESS FOR TESTING AN OBJECT-ORIENTED PROGRAMME
PROCEDE PERMETTANT DE TESTER UN PROGRAMME ORIENTE OBJET

(30) Priorität: 15.07.1993 DE 4323787
(43) Veröffentlichungstag der Anmeldung: 01.05.1996
(73) Patentinhaber: SIEMENS AKTIENGESELLSCHAFT, 80333 München (DE)
(72) Erfinder: JÜTTNER, Peter, Dr., D-81827 München (DE); KOLB, Sebald, D-85521 Ottobrunn (DE); SIEBER, Stefan, D-81739 München (DE); ZIMMERER, Peter, D-81737 München (DE)
(86) Internationale Anmeldenummer: DE9400781
(87) Internationale Veröffentlichungsnummer: WO9502863

(56) Entgegenhaltungen:
- EP-A- 0 213 486
- COMPUTER, Bd.26, Nr.5, Mai 1993, LONG BEACH US Seiten 52 - 61 JAMES R. LARUS 'Efficient Program Tracing'
- THE SECOND CONFERENCE ON ARTIFICIAL INTELLIGENCE APPLICATIONS, 13. Dezember 1985, MIAMI BEACH, FLORIDA Seiten 422 - 427 MASAYUKI NUMAO ET AL. 'Visual debugger for Prolog'
- PROCEEDINGS OF THE 15TH INTERNATIONAL CONFERENCE ON SOFTWARE ENGINEERING, 21. Mai 1993, BALTIMORE, MARYLAND Seiten 456 - 465 SOUGATA MUKHERJEA ET AL. 'Applying Algorithm Animation Techniques for Program Tracing, Debugging, and Understanding'

## Beschreibung

In vermehrtem Umfang hat sich bei der Erstellung umfangreicher Programme die Technik des objektorientierten Programmierens etabliert. Diese Technik bietet sowohl bei der Erstellung der Programme als auch beim Ablauf verschiedenste Vorteile.

Dem Programmierer wird beispielsweise das strukturierte Programmieren erleichtert. Weiterhin ist es einfach, Klassen aus bereits vorhandenen Programmen für neue Programme zu übernehmen. Da Objekte zur Laufzeit erzeugt und auch wieder gelöscht werden können, wird zu jedem Zeitpunkt des Ablaufs nur der aktuell benötigte Speicher beansprucht. Im Zusammenhang mit der Erstellung der objektorientierten Programme hat sich die Technik des OOD (object oriented design) [1] durchgesetzt. Diese Technik macht sich grafische Eingabemöglichkeiten bei der Erstellung von Programmen zu Nutze und ist in [2]-[5] näher erläutert.

Das Dokument : COMPUTER, 26, no. 5, May 1993, LONG BEACH, US, Seiten 52-61; JAMES R. LARUS 'Efficient Program Tracing' ist für das Verständnis der Erfindung hilfreich. Der Inhalt dieses Dokuments bezieht sich auf die Verfolgung von Programmabläufen.

Schwierigkeiten bestehen zur Zeit beim Test objektorientierter Programme. Dies liegt insbesondere an der dynamischen Struktur beim Ablauf dieser Programme. Da während des Programmablaufs Objekte erzeugt und wieder gelöscht werden, sowie Methoden aufgerufen werden, ist es schwierig, bei einem Test alle Objekte und Methodenaufrufe bezüglich ihrer Richtigkeit und ihrer Parameter zu überprüfen.

Verfahren und Werkzeuge, die einen umfangreichen Test von objektorientierten Programmen zulassen, sind derzeit nicht bekannt.

Der im folgenden erläuterten Erfindung liegt die Aufgabe zugrunde, ein Verfahren zum Test eines objektorientierten Programmes anzugeben.

Diese Aufgabe wird gemäß den Merkmalen des Patentanspruchs 1 gelöst.

Weiterbildungen der Erfindung ergeben sich aus den Unteransprüchen.

Da die Funktion objektorientierter Programme auf der Kommunikation der Objekte untereinander basiert, wird bei der Erfindung in vorteilhafter Weise die Kommunikation der Objekte untereinander analysiert. Dies geschieht erfindungsgemäß dadurch, daß alle kommunikationsrelevanten Stellen in den Programmen, d.h. in den Klassen und in den Methodenaufrufen dahingehend instrumentiert werden, daß die testrelevante Information (z.B. Methodenname, Parameterwerte, Aufruf er und gerufenes Objekt) beim beispielsweise Methodenaufruf oder beim Instantiieren bzw. Löschen eines Objekts in einem separaten Protokoll festgehalten werden können. Ein weiterer Bestandteil des erfindungsgemäßen Verfahrens besteht in der vorteilhaften Auswertung einer erstellten Protokolldatei. Hierdurch wird einem Testenden der Programmablauf übersichtlich dargestellt.

In vorteilhafter Weise geschieht die Veranschaulichung des Programmablaufs in grafischer Art. Wenn man diese Darstellung so wählt, daß sie der grafischen Repräsentation beim object oriented design entspricht, so kann man einfach manuell oder automatisch die Spezifikation des Programmes mit dem tatsächlichen Ablauf vergleichen.

Die erfindungsgemäß vorgesehene Instrumentierung für Methoden bietet den Vorteil, daß man beim Test leicht überprüfen kann, mit welchen Parametern welche Methode aufgerufen wurde. Weiterhin kann man statistisch auswerten, wie oft eine Methode aufgerufen wurde. Durch die Instrumentierung der Methodenaufrufe gewinnt man Informationen über die übergebenen Parameter und darüber, mit welchen Methodenaufrufen welche Methoden in welchen Objekten aufgerufen werden. Durch die Instrumentierung von beispielsweise den Methodenaufrufstellen in den verschiedenen Objekten gewinnt man Informationen, die man vor allen Dingen für die Analyse verketteter Methodenaufrufe benötigt. Verkettete Methodenaufrufe sind solche Methodenaufrufe, die beispielsweise von einem Objekt ausgehen und in einem weiteren Objekt wiederum einen Methodenaufruf bewirken und welcher dann in einem nächsten Objekt wieder eine Methode aufrufen kann.

Ein Vorteil des erfindungsgemäßen Verfahrens besteht vor allen Dingen in der Erstellung von Objektbilanzen. Damit läßt sich statistisch leicht feststellen, welche und wie viele Objekte von welchen Klassen während des Programmablaufs instantiiert wurden. Weiterhin kann man daraus ersehen, ob alle aufgerufenen Objekte auch wirklich benutzt wurden und ob mit den Methoden die richtigen Objekte angesprochen wurden. Man erkennt auch leicht, ob alle instantiierten Objekte auch wieder gelöscht worden sind.
Weiterhin gewinnt man so die Möglichkeit, die Tätigkeit des Programmierers überwachen zu können. Häufig gibt es in größeren Unternehmen an Programmierer die Anweisung, bereits erstellte Klassen oder Programmteile in neuen Programmen wieder zu verwenden. Mit dem erfindungsgemäßen Verfahren kann man nun leicht überprüfen, ob die Klassen, die in ein neues Programm eingebunden wurden, auch verwendet werden, oder ob sie nur einen quasi unnötigen Ballast im Programmcode darstellen.

Im folgenden wird die Erfindung anhand von Figuren und Beispielen weiter erläutert.

Figur 1 zeigt als Beispiel ein Blockschaltbild des erfindungsgemäßen Verfahrens.

Figur 2 zeigt die Spezifikation eines objektorientierten Programmes.

Figur 3 zeigt die Realisierung des Programmes von Figur 2.

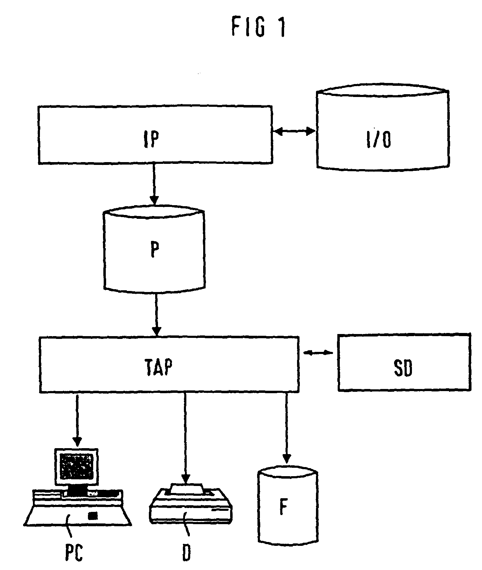

Figur 1 zeigt als Beispiel ein Blockschaltbild des erfindungsgemäßen Verfahrens. Mit I/O ist die Aus- und Eingabe des spezifizierten und nicht instrumentierten objektorientierten Programmes bezeichnet. Mit IP ist das instrumentierte objektorientierte Programm dargestellt. P bezeichnet die Protokolldatei, die beim Test erstellt wird. TAP stellt das Test-Auswerteprogramm dar, mit dem die beim Test erstellte Protokolldatei aufbereitet wird. SD heißen die Spezifikationsdaten, mit denen das objektorientierte Programm spezifiziert wurde. Über das Test-Auswerteprogramm TAP können die aufbereiteten Protokolldaten beispielsweise auf einem PC auf einem Drucker und in einer Datei F ausgegeben werden. In diesem Beispiel des erfindungsgemäßen Verfahrens geschieht beim Testen eines objektorientierten Programmes folgendes. Die Original- Eingaben, die I/O, werden dem instrumentierten objektorientierten Programm IP zugeführt. Beim Abarbeiten des instrumentierten Programmes IP werden die Eingabedaten I/O verarbeitet und falls im Programm IP instrumentierte Programmteile angesprochen werden, ergeben sich Testprotokoll-Daten, welche in einer Protokolldatei P oder einem Protokoll P abgelegt werden. Die Ausgabe-Daten von IP entsprechen dabei den Ausgabe-Daten des nicht instrumentierten Programmes. Beispielsweise sind in dem objektorientierten Programm Methoden und Aufrufstellen von Methoden in Objekten instrumentiert. Insbesondere können bei in C++ erstellten Programmen beispielsweise alle Memberfunktionen, statische Memberfunktionen, Konstruktoren, Destruktoren, überladene Operatoren, Friends und Casts instrumentiert sein.

Anschließend wird das Protokoll P beispielsweise durch das Test-Auswerteprogramm TAP ausgewertet. Im Zuge der Auswertung kann die Protokolldatei beispielsweise grafisch dargestellt werden. Eine besonders geeignete Form der grafischen Darstellung bietet jenes grafische Format, welches beim Spezifizieren des Programmes im Zuge des objektorientierten Designs verwendet wurde. Man kann so leicht im Vergleich von Protokoll-Daten mit den Spezifikationsdaten SD Unterschiede zwischen Programm und zugehöriger Spezifikation feststellen. Es besteht die Möglichkeit, diese Unterschiede am Bildschirm oder am Drukker auszugeben oder auch in einer Datei abzuspeichern, um sie weiter verarbeiten zu können. Bei der Analyse des Protokolls P durch das Test-Auswerteprogramm TAP sind auch noch andere Auswertemethoden denkbar. Beispielsweise kann die Objektlandschaft angezeigt werden. Das bedeutet zu einem aktuellen Zeitpunkt, oder für einen Zeitabschnitt können alle existierenden Objekte ausgegeben werden. Weiterhin ist es denkbar, einen Methodenaufrufbaum darzustellen. Dieser Methodenaufrufbaum zeigt alle weiteren Methodenaufrufe an, die ein selektierter Methodenaufruf zur Folge hat. Weiterhin kann man sich denken, die Objektlandschaft mit Aufrufbeziehung anzeigen zu lassen, wobei alle jemals existenten Objekte einschließlich ihrer gegenseitigen Methodenaufrufe angezeigt werden können. Zusätzlich ist es denkbar, die Klassenlandschaft mit ihren Aufrufbeziehungen darzustellen. Dies hat zur Folge, daß alle existierenden Klassen einschließlich ihrer Methodenaufruf-Beziehungen untereinander gezeigt werden. Alle diese vorab aufgezählten Darstellungen werden in den verschiedenen OOD-Methoden zur Spezifikation eines objektorientierten Programmes verwendet. In analoger Weise kann man die Protokolldatei auf statistische Merkmale hin analysieren. Beispielsweise können alle Objekte gezählt werden. Es können sämtliche Methodenaufrufe gezählt werden, und man kann über eine Analyse der maximal und minimal existierenden Objekte bzw. Methodenaufrufe Aussagen über die Programm-Komplexität machen.

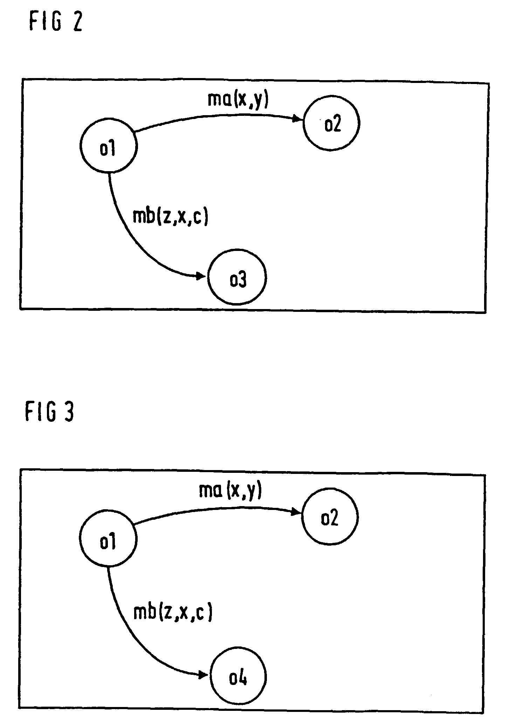

Figur 2 zeigt ein objektorientiertes Programm in grafischer Darstellung nach Art des objektorientierten Designs (OOD). Es sind drei Objekte ol bis o3 aus zugehörigen Klassen K1 bis K3 dargestellt. ol ruft beim Objekt o2 eine Methode ma mit den Parametern x und y auf. ol ruft auch beim Objekt o3 eine Methode mb mit den Parametern z, x und c auf. Figur 2 zeigt hier beispielsweise die Spezifikationsform des objektorientierten Programmes. Für diese Spezifikation folgt nun der Source-Code des objektorientierten Programmes.

### 1. C++-Source-Code

Im folgenden wird das Beispiel in C++-Syntax beschrieben.

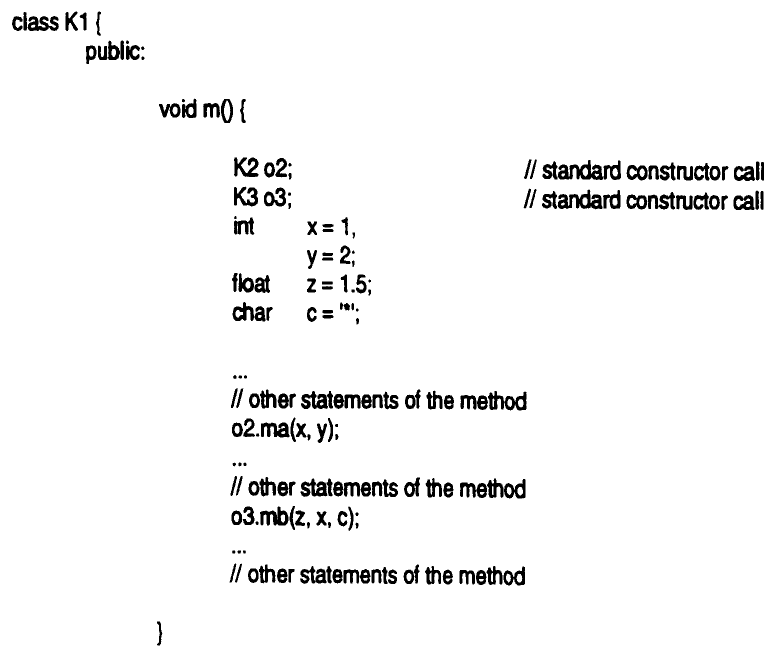

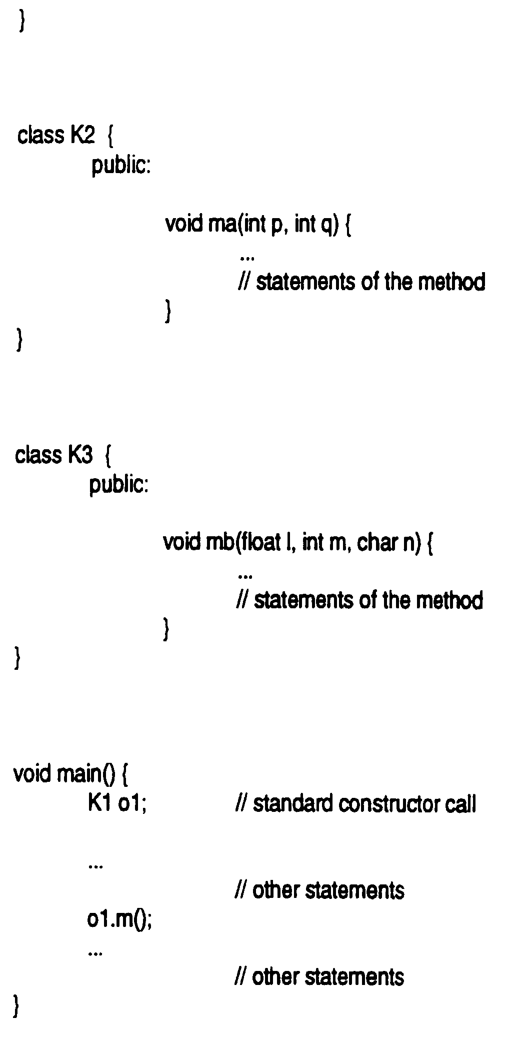

Für das gezeigte Beispiel folgt nun der nach dem erfindungsgemäßen Verfahren instrumentierte Source-Code. Darin sind die instrumentierten Stellen durch Fettdruck hervorgehoben.

### 2. Instrumentierter C++-Source-Code

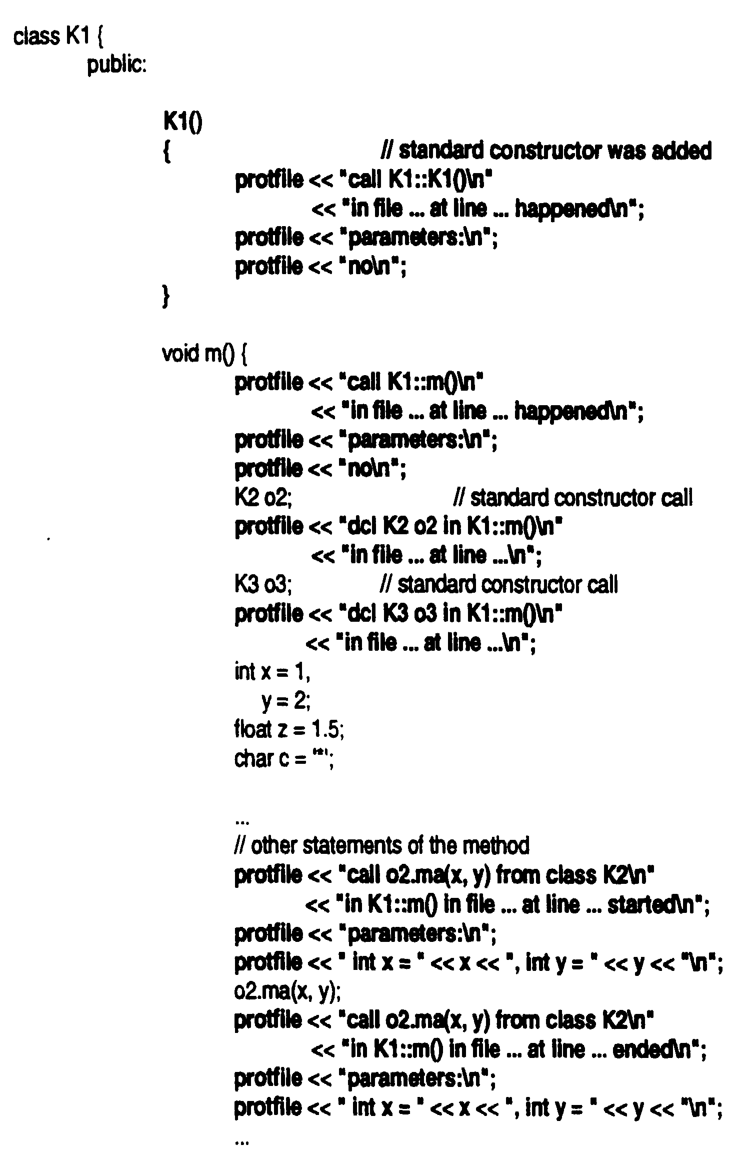

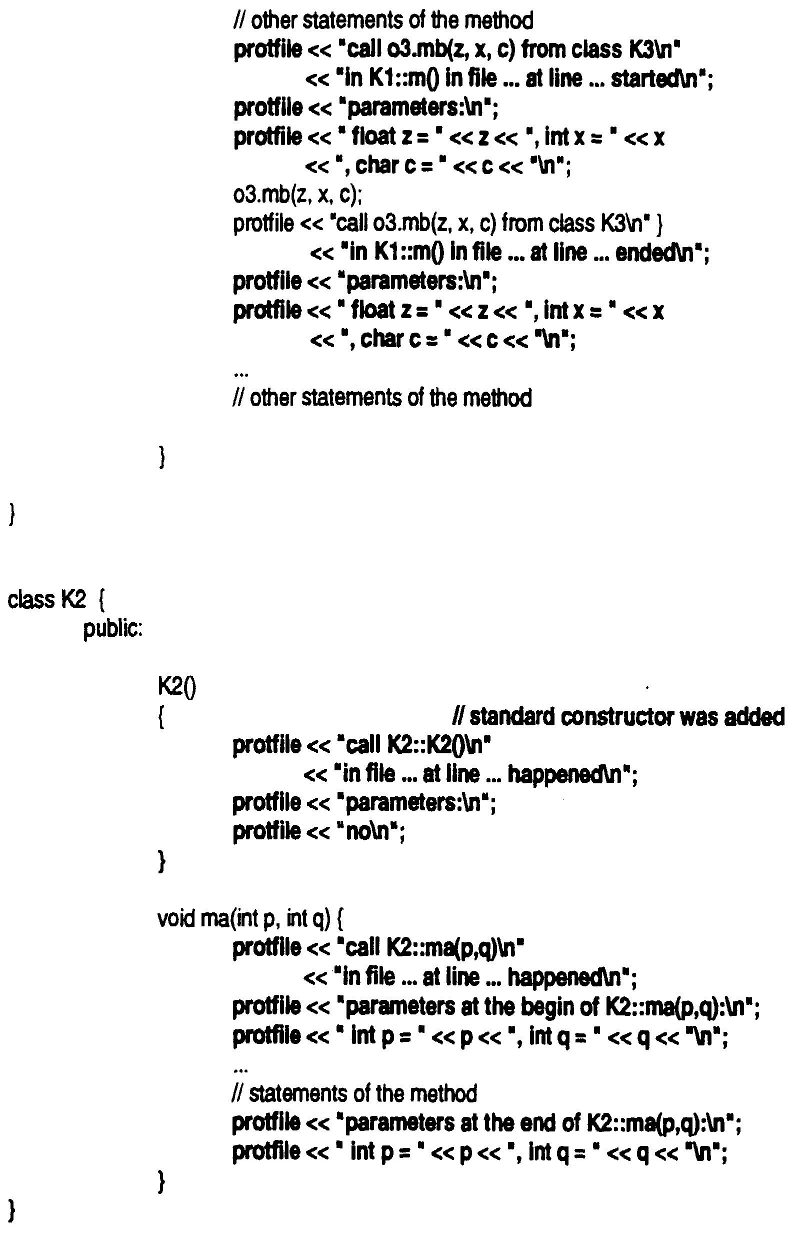

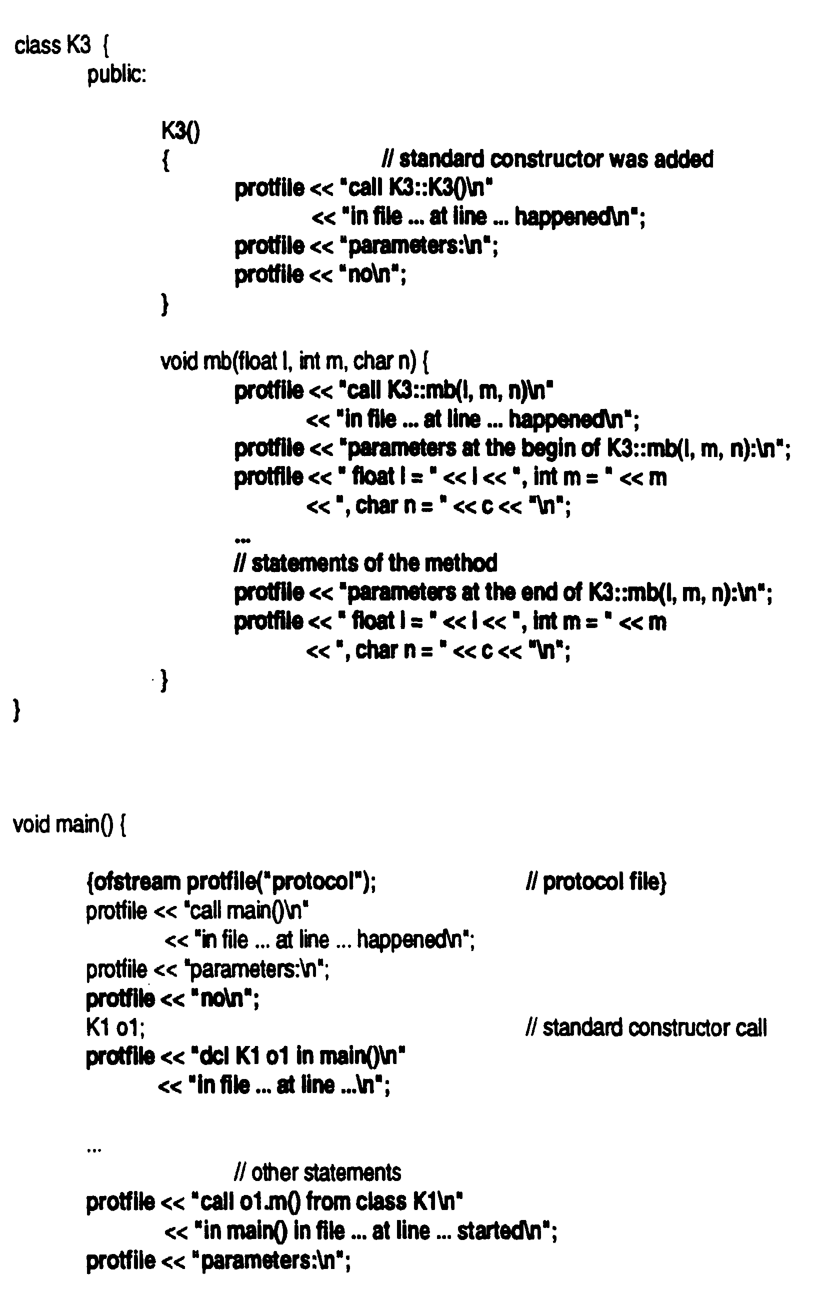

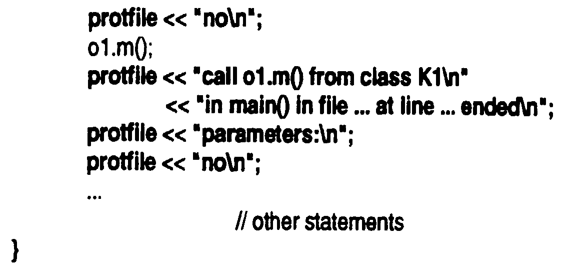

Es ist hier zwar der Source-Code instrumentiert, doch ist es auch möglich, wenn man genügend Kenntnis über die eingesetzte Hardware hat und den entsprechenden Compiler in Verbindung mit dem Objektcode, der für das objektorientierte Programm erzeugt wird, gut kennt, daß die entsprechende Instrumentierung auch auf der Objektcode-Ebene erfolgt.

Hier ist nur die Instrumentierung des Source-Codes gewählt worden, um ein anschauliches Beispiel darstellen zu können. Dieser instrumentierte Source-Code führt zu einer Ausgabeprotokolldatei, die im Anschluß folgt.

### 3. Ausgabe der Protokolldatei

Die beim Ablauf des Programmes (main function) erstellte Protokolldatei ist im folgenden aufgelistet. Die eingefügten Leerzeilen dienen ausschließlich der besseren Lesbarkeit.

Die angegebenen Parameterwerte sind natürlich nur exemplarisch, sie hängen logischerweise von den hier nicht im einzelnen aufgeführten Statements in den Methodenrümpfen ab. Ebenso sind bei der Ausgabe von "in file ... at line ... " die angegebenen drei Punkte ("...") jeweils durch den aktuellen Dateinamen und durch die aktuelle Zeilennummer im (nicht instrumentierten) Source-Code ersetzt.

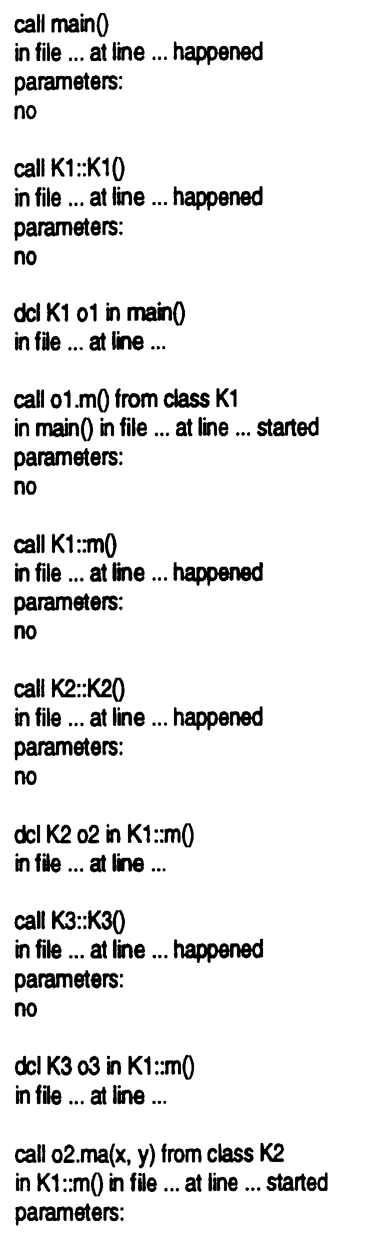

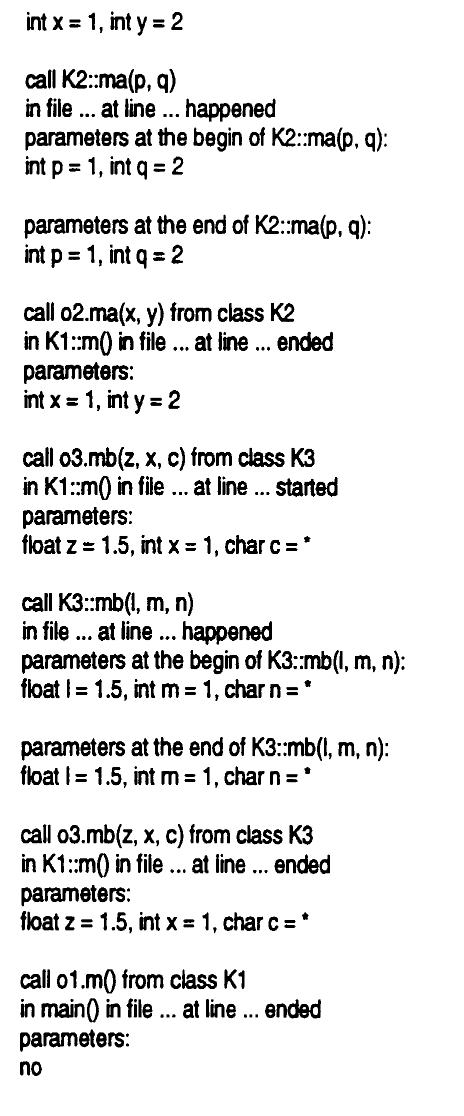

Mit dem erfindungsgemäßen Verfahren wird nun über die Aufbereitung durch das Test-Auswerteprogramm TAP die grafische Darstellung von Figur 3 erzeugt. Sie zeigt drei Objekte o1, o2 und o4, wobei ol am Objekt o2 die Methode ma mit den Parametern x und y aufruft und am Objekt o4 die Methode mb mit z, x und c aufruft. Hier ist deutlich zu erkennen, daß Figur 3 im Vergleich zur Spezifikation, welche in Figur 2 dargestellt ist, eine Abweichung aufweist.

In Figur 3 wird die Methode mb nämlich am Objekt o4, anstatt am Objekt o3 aufgerufen, was nicht mit dem Design übereinstimmt. Analog dazu können beispielsweise weitere Abweichungen vom Design, wie z.B. fehlende oder zusätzliche (und damit eventuelle überflüssige) Methodenaufrufe ermittelt werden.

Wichtig ist es, beim erfindungsgemäßen Verfahren zu beachten, daß die durch die Instrumentierung des Source-Codes beispielsweise ermittelte Protokolldatei nur als Mittel zum Zweck dient. Wesentlich ist es, daß die Protokolldatei weiterverarbeitet wird und geeignet beispielsweise grafisch aufbereitet wird. Geeignet bedeutet in diesem Zusammenhang, daß die Aufbereitung in Affinität zur Darstellung in der Phase des objektorientierten Designs erfolgt. Ein Ziel ist es hierbei beispielsweise, den eigentlichen Programmablauf anschließend direkt mit dem Design, d.h. mit den Ergebnissen aus der OOD-Phase vergleichen zu können.
Insbesondere kann die Instrumentierung des zu testenden Programmes auch vorteilhaft automatisiert durch ein hier nicht näher beschriebenes Instrumentierungs-Programm erfolgen.
[1] Introduction to Object Technologie
   Steve Cook
   OOP 1992, Conference Proceedings
   SIGS Publications, New York, 1992.
[2] H. Heilmann, A. Gebauer, M. Simon: Objektorientiertes
   Software Engineering.
   Handbuch der modernen Datenverarbeitung (HMD), 30. Jg., 1993, Heft 170, S. 11-23.
[3] S. Schäfer: Klassische Entwurfstechniken für die objektorientierte
   Softwareentwicklung. Handbuch der modernen
   Datenverarbeitung (HMD), 30. Jg.,
   1993, Heft 170, S. 47-54.
[4] H. Heß, A.-W. Scheer: Methodenvergleich zum objektorientierten Design von
   Softwaresystemen. Handbuch der modernen Datenverarbeitung (HMD), 29. Jg., 1992,
   Heft 165, S. 117-137
[5] H. Schaschinger, H. Sikora, I. Bäuchler: Objektorientierte Analyse- und
   Designmethoden - Überblick und kritische Betrachtung.
   Softwaretechnik-Trends,
   Band 11, Heft 4, Nov 1991, S. 32-43.

## Patentansprüche

1. Verfahren zum Test eines objektorientierten Programmes (o1, o2, o3, o4),
a) bei dem mindestens eine Programmspezifikation des zu testenden Programmes auf einem Testrechner in einer ersten abstrakten Darstellungsform, als abstrakte Spezifikation in Form eines Message Sequence Charts verfügbar gemacht wird,
b) bei dem mindestens ein Kommunikations-Vorgang (ma(x,y)) zwischen Objekten des Programmes in einem Protokoll (P) protokolliert wird, indem mindestens ein Programmteil des Programmes, welcher vom Kommunikationsvorgang betroffen ist, instrumentiert wird,
c) bei dem das Programm auf einem Rechner mindestens einmal abläuft,
d) bei dem das Protokoll (P) automatisch in ein Message Sequence Chart als abstrakter Programmablauf, überführt wird,
e) und bei dem der Test (TAP) dadurch erfolgt, daß der abstrakte Programmablauf mit der abstrakten Spezifikation vergleichen wird, indem die jeweiligen Message Sequence Charts linear durchsucht werden und überprüft wird, ob die Kommunikations-Vorgänge in der Spezifikation auch im Programmablauf stattfinden.

2. Verfahren nach Anspruch 1,
bei dem Methoden (ma(x,y),mb(z,x,c)) instrumentiert werden.

3. Verfahren nach einem der vorhergehenden Ansprüche,
bei dem Methodenaufrufe instrumentiert werden.

4. Verfahren nach einem der obigen Ansprüche,
bei dem als Bilanz aufgerufene und/oder gelöschte Programmelemente erfaßt werden.

5. Verfahren nach Anspruch 4,
bei dem Bilanzen über Klassen, oder Objekte, oder Methoden erstellt werden, indem die zahl der jeweiligen Aufruf- und Löschvorgänge miteinander verglichen wird.

6. Verfahren nach einem der obigen Ansprüche,
bei dem über eine statistische Auswertung die Wiederverwendung mindestens einer in dem objektorientierten Programm eingefügten Klasse überprüft wird.

## Claims

1. Process for testing an object-oriented program (o1, o2, o3, o4),
a) in which at least one program specification of the program to be tested is made available on a test computer in a first abstract form of representation, as an abstract specification in the form of a message sequence chart,
b) in which at least one communication operation (ma(x,y)) between objects of the program is logged in a protocol (P), in that at least one program part of the program which is affected by the communication operation is instrumented,
c) in which the program is run at least once on a computer,
d) in which the protocol (P) is transferred automatically into a message sequence chart, as an abstract program run,
e) and in which the test (TAP) takes place by the abstract program run being compared with the abstract specification by the particular message sequence charts being searched linearly and a check being made as to whether the communication operations in the specification also take place in the program run.

2. Process according to Claim 1, in which methods (ma(x,y),mb(z,x,c)) are instrumented.

3. Process according to one of the preceding claims, in which method calls are instrumented.

4. Process according to one of the above claims, in which called and/or cancelled program elements are recorded as a balance.

5. Process according to Claim 4, in which balances of classes, or objects, or methods are created by comparing the number of the respective call and cancellation operations with one another.

6. Process according to one of the above claims, in which the reuse of at least one class inserted into the object-oriented program is checked by means of a statistical evaluation.

## Revendications

1. Procédé pour le test d'un programme orienté objet (o1, o2, o3, o4),
a) dans lequel au moins une spécification de programme du programme à tester sur un ordinateur de test est mise à disposition sous une première forme de représentation abstraite, en tant que spécification abstraite sous la forme d'un "message sequence charts",
b) dans lequel au moins une opération de communication (ma (x,y)) entre des objets du programme est enregistrée dans un protocole (P), et en instrumentant au moins une partie du programme qui est concernée par l'opération de communication,
c) dans lequel le programme est exécuté au moins une fois sur un ordinateur,
d) dans lequel le protocole (P) est transformé automatiquement en un "message sequence chart" en tant qu'exécution abstraite de programme, et
e) dans lequel le test (TAP) est effectué de telle façon que l'exécution abstraite du programme est comparée à la spécification abstraite, en explorant les "message sequence charts" respectifs de manière linéaire pour vérifier si les opérations de communication de la spécification se déroulent également dans l'exécution du programme.

2. Procédé selon la revendication 1,
dans lequel des méthodes (ma (x,y), mb(z,x,c)) sont instrumentées.

3. Procédé selon l'une des revendications précédentes,
dans lequel les appels de méthodes sont instrumentés.

4. Procédé selon l'une des revendications ci-dessus,
dans lequel sont saisis les éléments de programme appelés comme bilan et/ou effacés.

5. Procédé selon la revendication 4
dans lequel des bilans sont établis sur des classes, ou des objets, ou des méthodes, en comparant le nombre des opérations respectives d'appel et d'effacement.

6. Procédé selon l'une des revendications ci-dessus,
dans lequel la réutilisation d'au moins une des classes intégrées dans le programme orienté objet est vérifiée grâce à une analyse statistique.
